# EUROPÄISCHE PATENTSCHRIFT

(11) **EP 1 778 512 B1**
(45) Veröffentlichungstag und Bekanntmachung des Hinweises auf die Patenterteilung: **01.10.2008**
(21) Anmeldenummer: 05762977.6
(22) Anmeldetag: 15.07.2005
(51) Int. Cl.: B60K 15/04

(54) **FÜLLROHR FÜR DEN TREIBSTOFFTANK EINES KRAFTFAHRZEUGES MIT SELEKTIVER ÖFFNUNG**
SELECTIVELY OPENING FILLER NECK FOR THE FUEL TANK OF A MOTOR VEHICLE
AJUTAGE DE REMPLISSAGE A OUVERTURE SELECTIVE CONÇU POUR LE RESERVOIR DE CARBURANT D'UN VEHICULE AUTOMOBILE

(30) Priorität: 16.07.2004 AT 5042004 U
(43) Veröffentlichungstag der Anmeldung: 02.05.2007
(73) Patentinhaber: MAGNA STEYR Fuel Systems GesmbH, 8261 Sinabelkirchen (AT)
(72) Erfinder: BUCHGRABER, Markus, A-8262 Ilz (AT)
(74) Vertreter: Harringer, Thomas
(86) Internationale Anmeldenummer: PCT/AT2005/000276
(87) Internationale Veröffentlichungsnummer: WO 2006/007618

(56) Entgegenhaltungen:
- EP-A- 1 262 355
- DE-A1- 10 051 212
- DE-C1- 10 157 090

## Beschreibung

Die Erfindung betrifft Füllstutzen für den Treibstofftank eines Kraftfahrzeuges mit einem Trichtereinsatz und einwärts daran anschließend einer schwenkbaren Klappe mit einem Verriegelungselement, welches von dem Füllrohr einer Zapfpistole gegen die Kraft einer Feder so verschwenkbar ist, dass es die Klappe freigibt. Zum Betanken wird das Füllrohr einer Zapfpistole in den Trichterteil eingeführt, wobei der Durchmesser des Füllrohres je nach Art des Treibstoffes verschieden ist. Für Dieseltreibstoff und verbleites Benzin (das im Aussterben ist) ist er groß, für bleifreies Benzin klein. Entsprechend ist der engste Durchmesser des Trichterteiles gewählt.

Es ist unmöglich das dickere Füllrohr in den engeren Trichter einzuführen. Wie aber ist ein Einführen des dünneren Endrohres in den weiteren Trichter zu verhindern ? Das ist die der Erfindung zugrunde liegende Frage.

Aus der EP 11 99 208 A1 ist eine Lösung dieses Problems bekannt. Sie besteht darin, dass der innere Teil des Trichters etwas enger als das für Dieselkraftstoff weitere Endrohr und in seiner Längsachse verschiebbar ist. Bei Einführen des weiteren Endrohres wird er verschoben und gibt die Verbindung zu einer Betankungsentlüftungsleitung frei, er wirkt gewissermaßen als Ventil. Mit dem engeren Endrohr gelingt das nicht, die Betankungsentlüftung ist blockiert. Damit ist aber das Befüllen mit dem falschen Treibstoff nicht zu verhindern. Bei ausreichend kleinem Durchfluss, wenn nämlich nicht der ganze Querschnitt des Füllrohres flüssigkeitsdurchstömt ist.

Bei einer weiteren aus der DE 100 51 212 A1 bekannten Vorrichtung wird eine unter der Bezeichnung Bleifreiklappe bekannte Klappe mittels mindestens eines Verriegelungshebels festgehalten, der mit einer Schulter ins innere eines Trichtereinsatzes ragt. Bei Einführen eines Füllrohres mit ausreichend großem Durchmesser wird der Verriegelungshebel beiseite gedrückt und die Klappe geöffnet. Ist der Durchmesser des Füllrohres zu klein, gelingt das nicht. Es hat sich aber gezeigt, dass durch schräges Einführen eines zu dünnen Füllrohres und geeignete Bewegungen der Mechanismus überlistet werden kann.

Ein Füllstutzen mit den Merkmalen des Oberbegriffs des unabhängigen Anspruchs 1 ist bekannt aus EP-A-1 262 355.

Die Erfindung soll nun eine Lösung vorschlagen, die das Befüllen mit dem falschen Treibstoff zuverlässig verhindert; natürlich mit geringstmöglichem Bauaufwand.

Erfindungsgemäß wird das dadurch erreicht, dass die Klappe um eine im Raum verlagerbare Scharnierachse drehbar und von mindestens zwei jeweils um eine Achse schwenkbaren Elementen gehalten ist, die die Klappe nur freigeben, wenn beide Elemente von dem eingeführten Füllrohr gegen die Kraft einer Feder beiseite geschwenkt werden. Dadurch, dass die Scharnierachse nicht raumfest ist, können sich die Klappe und die sie haltenden Elemente im Raum der Schrägstellung des Füllrohres der Zapfpistole entsprechend ausrichten. So ist die Verriegelung nicht mehr zu überlisten. Die Frage, wie die Scharnierachse beweglich geführt ist, kann im Rahmen der Erfindung auf verschiedene Weise gelöst werden. Die Schwenkachsen (oder Schwenkwellen) der Elemente hingegen sind raumfest.

In einer praktischen Ausführungsform sind zwei vorzugsweise einander gegenüber liegende Elemente um eine gemeinsame Achse schwenkbar, die im Füllstutzen raumfest und über der Klappe angeordnet ist und stützen sich die auf die Elemente wirkenden Federn innen am Füllstutzen ab. Zusammen mit der verlagerbaren Scharnierachse kann so ein Element durch schräges Einführen des Füllrohres eingedrückt werden, das gegenüberliegende wird aber durch seine Feder nachgeführt. Die gemeinsame Achse bringt eine fühlbare Senkung der Herstellungskosten.

In einer Ausführungsform ist zwischen dem Trichtereinsatz und der Klappe ein um eine raumfeste Achse schwenkbarer Trichterteil, an dem die Scharnierachse für die Klappe angebracht ist und an dessen unterem Rand die geschlossene Klappe anliegt, und ist mindestens eines der schwenkbaren Elemente ein Verriegelungshebel mit einer in den Trichterteil ragenden schrägen Schulter und mit an seinem einwärtigen Ende einer die Klappe umgreifenden Klaue. Die Scharnierachse wird also von dem schwenkbaren Trichterteil geführt, der sich seinerseits nach dem eingeführten Füllrohr der Zapfpistole ausrichtet.

In Weiterbildung dieser Ausführungsform ist die raumfeste Achse des schwenkbaren Trichterteiles auch die Achse der zwei schwenkbaren Elemente, die einander gegenüberliegende Verriegelungshebel sind und die Scharnierachse quer zu der Schwenkachse der Elemente ist. Es ist also für alle drei beweglichen Teile nur eine einzige Achse erforderlich.

In einer zweiten, besonders vorteilhaften Ausführungsform trägt eines der schwenkbaren Elemente die Scharnierachse der Klappe und ein weiteres schwenkbares Element ist ein der Scharnierachse gegenüber angeordneter Verriegelungshebel, wobei auf beide schwenkbaren Elemente je eine Druckfeder wirkt, die sich im Inneren des Füllstutzens abstützt. So sind überhaupt nur zwei schwenkbare Elemente erforderlich, wovon eines die Scharnierachse trägt. Hier tritt die überraschende Wirkung der Erfindung besonders stark auf. Wenn nur der Verriegelungshebel gegen die Kraft seiner Feder vom Füllrohr nach aussen gedrückt wird, so wird die ganze Klappe mit ihrer Scharnierachse von ihrer Feder in dieselbe Richtung gedrückt, und bleibt so zuverlässig verriegelt.

Im folgenden wird die Erfindung anhand von Abbildungen beschrieben und erläutert. Es stellen dar:
- Fig. 1:: einen Längsschnitt durch den Erfindungsgegenstand in einer ersten Ausfiihrungsform,
- Fig. 2:: einen Querschnitt 11-M in Fig. 1,
- Fig. 3:: einen Längsschnitt zu Fig. 2, in richtiger Betankungssituation,
- Fig. 4:: wie Fig 3, in falscher Betankungssituation,
- Fig. 5:: einen Längsschnitt durch den Erfindungsgegenstand in einer zweiten Ausführungsform.
- Fig. 6:: einen Längsschnitt nach VI-VI in Fig. 5.

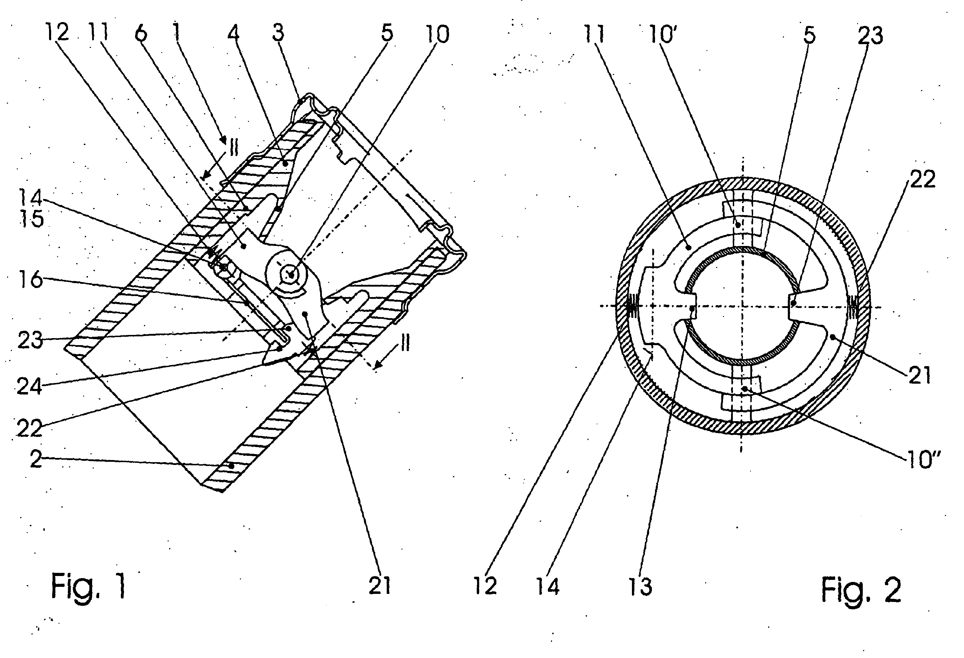

In **Fig. 1.** und **Fig. 2** ist ein Füllstutzen summarisch mit 1 bezeichnet. Er besteht aus einem zum nicht dargestellten Kraftstoffbehälter führenden Rohr 2, einer für die Aufnahme eines Verschlusses ausgebildete Ringkappe 3 und einem Einsatzstück 4. In der abgebildeten Ausführungsform hält die Ringkappe 3 das Einsatzstück 4 im Rohr 2. Diese Teile könnten aber auch einstückig sein. Ein einwärts konisch zulaufender Trichtereinsatz 5 und ein innen am Rohr 2 anliegender Rohreinsatz 6 bilden das Einsatzstück 4.

In dem Einsatzstück 4 ist eine Schwenkachse 10 durch zwei Achsen 10', 10" verkörpert, die zwischen Trichtereinsatz 5 und Rohreinsatz 6 angeordnet sind. Zwei Elemente 11, 21 sind um die Achse 10 schwenkbar. Die Elemente 11,21 bilden im Wesentlichen Halbkreisbögen in entgegengesetzten Richtungen und sind mit ihren Enden auf den Achsen 10', 10" gelagert. Das erste Element 11 hat ungefähr in Bogenmitte eine schräge Schulter 13 und eine Scharnierachse 14, um die eine Klappe 16 gegen die Kraft einer Drehfeder 15 aufgestoßen werden kann. Weiters greift dort eine Druckfeder 12 an, die die Scharnierachse 14 einwärts zu drücken bestrebt ist und sich mit ihrem anderen Ende innen am Rohreinsatz 6 abstützt. Das zweite Element 21 ist hier ein Verriegelungshebel, der ungefähr in Bogenmitte eine schräge Schulter 23 und eine Klaue 24 hat, die die Klappe an ihrem der Scharnierachse 14 gegenüberliegenden Seite umgreift und so verriegelt. Auch sie wird von eine Druckfeder 22 einwärts beaufschlagt.

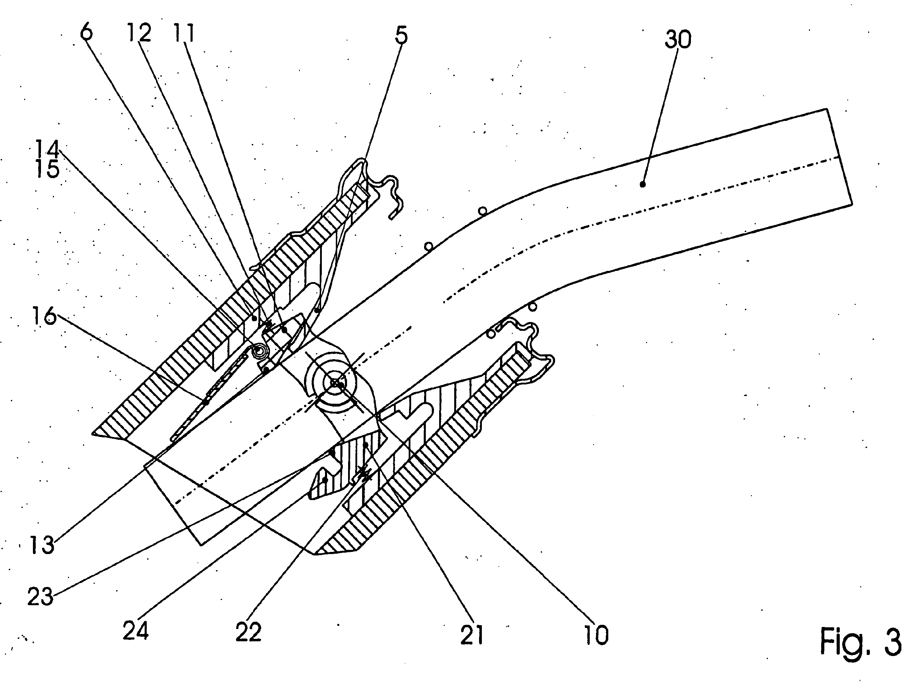

**Fig. 3** zeigt die Wirkung der Erfindung bei Einführen eines Füllrohres 30 mit dem richtigen Durchmesser, das zu einer Zapfpistole für den richtigen Treibstoff gehört. Dieser ist ungefähr der kleinste Durchmesser des Trichtereinsatzes 5, jedenfalls nicht wesentlich kleiner. Das Füllrohr 30 kann dann beide Schultern 13,23 und mit ihnen beide Elemente 11,21 gleichzeitig nach aussen bewegen. Dadurch wird gleichzeitig auf einer Seite die Klaue 24 von der Klappe 16 weggezogen und auf der anderen Seite die Scharnierachse 14 mit der Klappe 16 von der Klaue 24 weg.

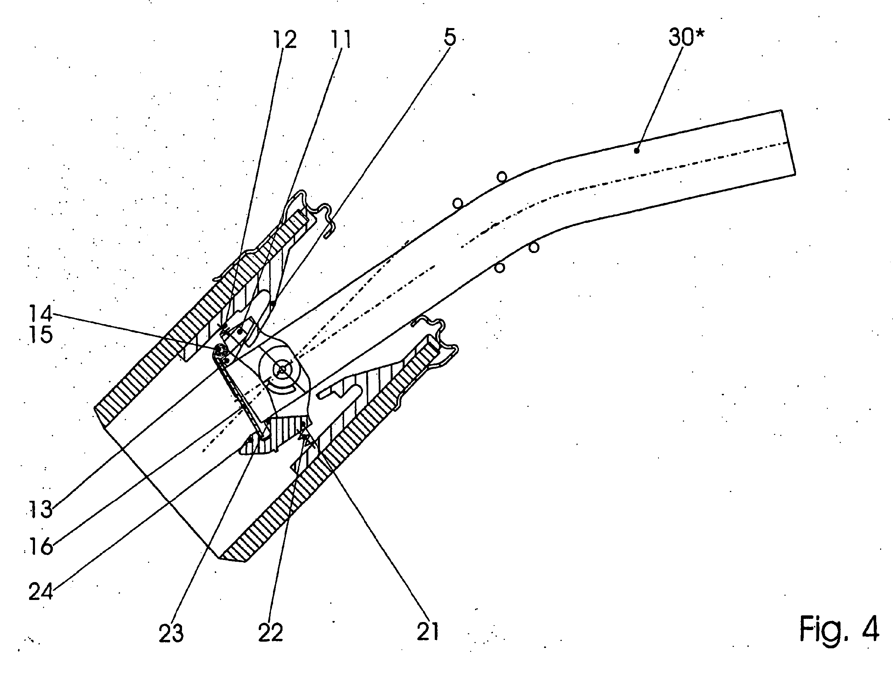

**Fig. 4** zeigt die Wirkung der Erfindung bei Einführen eines Füllrohres 30* mit zu kleinem Durchmesser, das zu einer Zapfpistole für den falschen Treibstoff gehört. Das Füllrohr 30* wird, um die Verriegelung zu überlisten, so geführt, dass das erste Element 11 mit der Scharnierachse 14 und der Klappe 16 gegen die Kraft der Feder 12 nach aussen gedrückt wird. Dadurch aber kann die andere Druckfeder 22 auf der gegenüberliegenden Seite das zweite Element mit der Verriegelungsklaue 24 zur Mitte hin verschieben, sodass sie die Klappe 16 weiterhin fest verriegelt hält. Wenn das Füllrohr 30* so eingeführt wird, dass es das Element 21 mit der Verriegelungsklaue 24 gegen die Kraft seiner Feder 22 verschiebt, so folgt dank der ersten Feder 12 die Klappe 16 in Richtung zur Verriegelungsklaue 24.

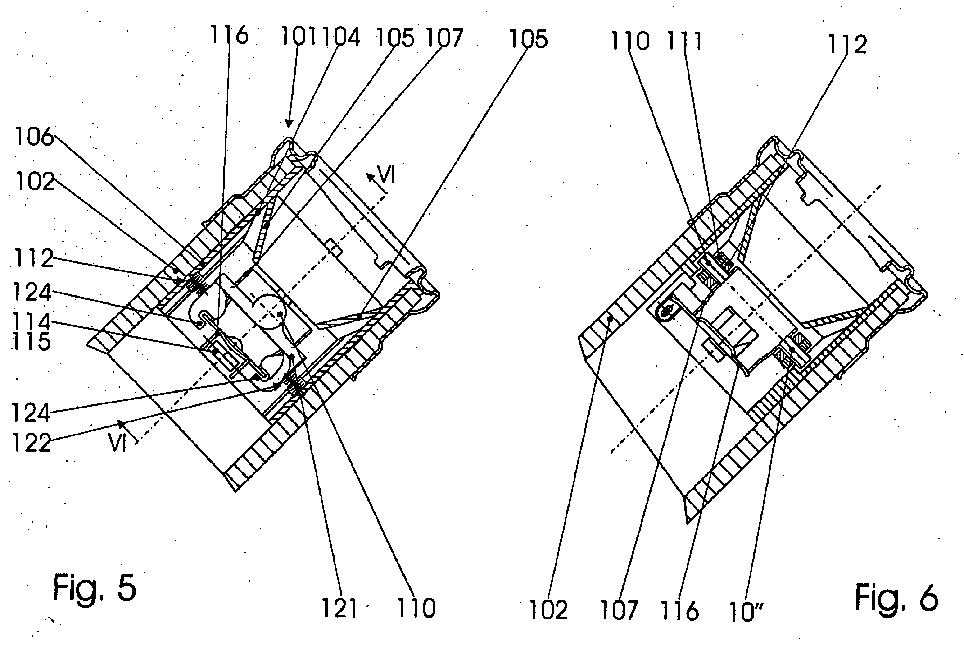

Die Ausführungsform der **Fig. 5** und **Fig. 6****,** in der entsprechende Bezugszeichen um 100 erhöht sind, unterscheidet sich von der vorhergehenden dadurch, dass an den Trichtereinsatz 5 ein um die Achse 10 schwenkbarer Trichterteil 107 anschließt und dass beide Elemente 111, 121 Verriegelungsklauen sind. Der schwenkbare Trichterteil 107 trägt an seinem unteren Rand die Scharnierachse 114 mit Drehfeder 115 der Klappe 116, wobei die Scharnierachse 114 hier - in Richtung der Längsachse des ganzen Füllstutzens gesehen - rechtwinkelig zur Schwenkachse 110 ausgerichtet ist.

## Patentansprüche

1. Füllstutzen (1) für den Treibstofftank eines Kraftfahrzeuges mit einem Trichtereinsatz (5) und einwärts daran anschließend einer Klappe (16) mit einem Verriegelungselement (24), welches beim Einführen des Füllrohres einer Zapfpistole so bewegt wird, dass es die Klappel (16) freigibt, **dadurch gekennzeichnet dass** die Klappe (16; 116) um eine im Raum verlagerbare Scharnierachse (14; 114) drehbar und von mindestens zwei jeweils um eine Achse (10; 110) schwenkbaren Elementen (11,21;111,121) gehalten ist, die die Klappe (16; 116) nur freigeben, wenn beide Elemente (11,21; 111, 121) von dem eingeführten Füllrohr (30) gegen die Kraft einer Feder (12, 22; 112,122) beiseite geschwenkt werden.

2. Füllstutzen nach Anspruch 1, **dadurch gekennzeichnet, dass** zwei Elemente (11,21; 111,121) um eine gemeinsame Achse (10; 110) schwenkbar sind, die im Füllstutzen (1;101) raumfest über der Klappe (16; 116) angeordnet ist und dass die auf die Elemente (11,21; 111,121) wirkenden Federn (12,22; 112,122) sich innen am Füllstutzen (1:101) abstützen.

3. Füllstutzen nach Anspruch 1, **dadurch gekennzeichnet, dass** zwischen dem Trichtereinsatz (105) und der Klappe (116) ein um eine raumfeste Achse (110) schwenkbarer Trichterteil (107) ist, an dem die Scharnierachse (114) für die Klappe (116) angebracht ist und an dessen unterem Rand die geschlossene Klappe (116) anliegt, und dass mindestens ein schwenkbares Element (111,121) ein Verriegelungshebel mit einer in den Trichterteil (107) ragenden Schulter (13) und mit einer einwärts der Schulter (123) die Klappe (116) umgreifenden Klaue (124) ist.

4. Füllstutzen nach Anspruch 3, **dadurch gekennzeichnet, dass** die raumfeste Achse (110) des schwenkbaren Trichterteiles (107) auch die Achse (110) der zwei schwenkbaren Elemente (111,121) ist, die einander gegenüberliegende Verriegelungshebel sind und die Scharnierachse (114) quer zu der Schwenkachse (110) der Elemente ist.

5. Füllstutzen nach Anspruch 1, **dadurch gekennzeichnet, dass** eines (11) der schwenkbaren Elemente (11,21) die Scharnierachse (14) der Klappe (16) trägt und ein weiteres schwenkbares Element (21) ein der Scharnierachse (14) gegenüber angeordneter Verriegelungshebel ist, und dass auf beide schwenkbaren Elemente (11,21) je eine Druckfeder (12,22) wirkt, die sich im Inneren des Füllstutzens (1) abstützt.

## Claims

1. Filler neck (1) for the fuel tank of a motor vehicle, having a funnel-type insert (5) and, adjoining the latter in the inward direction, a flap (16) with a locking element (24) which, when the filler tube of a gas-,pump nozzle is inserted, is moved so as to release the flap (16), **characterized in that** the flap (16; 116) can be rotated about a hinge axis (14; 114), which can be displaced in space, and is retained by at least two elements (11, 21; 111, 121) which can each be pivoted about a pin (10; 110) and only release the flap (16; 116) when the two elements (11, 21; 111; 121) are pivoted aside, counter to the force of a spring (12, 22; 112, 122), by the inserted filler tube (30).

2. Filler neck according to Claim 1, **characterized in that** two elements (11, 21; will, 121) can be pivoted about a common pin (10; 110) which is fixed in space, in the filler neck (1; 101), above the flap (16; 116), and **in that** the springes (12, 22; 112, 122), which act on the elements (11, 21; 111, 121), are supported on the inside of the filler neck (1; 101).

3. Filler neck according to Claim 1, **characterized in that** provided between the funnel-type insert (105) and the flap (116) is a funnel part (107) which can be pivoted about a spatially fixed pin (110), on which the hinge axis (114) for the flap (11.6) is disposed and against the lower periphery of which the closed flap (116) butts, and **in that** at least one pivotable element (111, 121) is a locking lever with a shoulder (7.3) projecting into the funnel part (107) and with a claw (124) which, in the inward direction in relation to the shoulder (7.23), engages around the flap (11.6).

4. Filler neck according to Claim 3, **characterized in that** the spatially fixed pin (110) of the pivotable funnel part (107) is also the pin (110) of the two pivotable elements (111, 121), which are mutually opposite locking levers, and the hinge axis (114) is transverse to the pivot pin (110) of the elements.

5. Filler neck according to Claim 1, **characterized in that** one (11) of the pivotable elements (11, 21) bears the hinge axis (14) of the flap (16) and a further pivotable element (21) is a locking lever arranged opposite the hinge axis (14), and **in that** in each case one associated compression spring (12, 22) supported in the interior of the filler neck (1) acts on each of the two pivotable elements (11, 21).

## Revendications

1. Ajutage de remplissage (1) pour le réservoir de carburant d'un véhicule automobile, avec une pièce en entonnoir (5) et, se raccordant à celle-ci vers l'intérieur, un clapet (16) avec un élément de verrouillage (24), qui est déplacé, lors de l'introduction du tuyau de remplissage d'un pistc>let à carburant, de telle manière qu'il libère le clapet (16), **caractérisé en ce que** le clapet (16; 116) peut tourner autour d'un axe de charnière (14; 114) déplaçable dans l'espace et est maintenu par au moins deux éléments (11, 21; 111, 121) pouvant pivoter respectivement autour d'un axe (10; 110), qui ne libèrent le clapet (16; 116) que lorsque les deux éléments (11, 21; 111, 121) pivotent latéralement contre la force d'un ressort (12, 22; 7.12, 122) sous l'action du tuyau de remplissage introduit (30).

2. Ajutage de remplissage selon la revendication 1, **caractérisé en ce que** deux éléments (11, 21; 111, 121) peuvent pivoter autour d'un axe commun (7.!7; 110), qui est stationnaire dans l'ajutage de remplissage (1; 101) au-dessus du clapet (7.6; 116) et **en ce que** les ressorts (12, 22; 7.12, 122) agissant sur les éléments (11, 21; 111, 7.21) s'appuient intérieurement sur l'ajutage de remplissage (1; 101).

3. Ajutage de remplissage selon la revendication 1, **caractérisé en ce qu'**une pièce en entonnoir (107) pouvant pivoter autour d'un axe fixe (110) est disposée entre la pièce en entonnoir (105) et le clapet (116), sur laquelle est installé l'axe de charnière (114) pour le clapet (116) et sur le bord inférieure de laquelle le clapet (116) s'applique lorsqu'il est fermé, et **en ce qu'**au moins un élément pivotant (11., 121) est un levier de verrouillage avec un épaulement (13) pénétrant dans la pièce en entonnoir (107) et avec une griffe (124) entourant le clapet (116) vers l'intérieur de l'épaulement (123).

4. Ajutage de remplissage selon la revendication 3, **caractérisé en ce que** l'axe fixe (110) de la pièce en entonnoir pivotant (107) est également l'axe (110) des deux éléments pivotants (111, 121), qui sont des leviers de verrouillage opposés l'un à l'autre et l'axe de charnière (114) est transversal à l'axe de pivotement (110) des éléments.

5. Ajutage de remplissage selon la revendication 1, **caractérisé en ce qu'**un des éléments pivotants (11, 21) porte l'axe de charnière (14) du clapet (16) et un autre élément pivotant (21) est un levier de verrouillage disposé en face de 7.'axe de charnière (14), et **en ce qu'**un ressort de pression respectif (12, 22) agit sur chacun des deux éléments pivotants (11, 21), en s'appuyant à l'intérieur de l'ajutage de remplissage (1).
